Europäisches Patentamt

European Patent Office

Office européen des brevets

(11) Publication number: **0 098 102**
**B1**

(12) **EUROPEAN PATENT SPECIFICATION**

(45) Date of publication of patent specification: 04.02.87

(51) Int. Cl.⁴: **C 03 B 37/025, G 02 B 6/14**

(21) Application number: 83303621.3

(22) Date of filing: 23.06.83

(54) Method of making optical fibre preforms and optical fibre preform.

(30) Priority: 25.06.82 GB 8218470

(43) Date of publication of application:
11.01.84 Bulletin 84/02

(45) Publication of the grant of the patent:
04.02.87 Bulletin 87/06

(84) Designated Contracting States:
DE

(56) References cited:
EP-A-0 017 742
DE-A-2 930 781
US-A-4 274 854

APPL. PHYS. LETT., vol. 33(9), November 1st,
1978, American Institute of Physics, Knoxville,
Tennessee V. RAMASWAMI et al. "Single
polarization optical fibers: Exposed cladding
technique" pages 814-816

(73) Proprietor: NATIONAL RESEARCH
DEVELOPMENT CORPORATION
101 Newington Causeway
London SE1 6BU (GB)

(72) Inventor: Birch, Robin David
4 Clifton Gardens
West End Southampton (GB)
Inventor: Payne, David Neil
15 Crabwood Close
Maybush Southampton (GB)

(74) Representative: Hasler, Christopher
Patent Department National Research
Development Corporation 101 Newington
Causeway
London SE1 6BU (GB)

Courier Press, Leamington Spa, England.

## Description

This invention relates to the preparation of optical fibres having a high birefringence, and relates particularly to the preparation of a preform from which such fibres can be drawn. Highly birefringent fibres have stable fast and slow polarisation axes, and linearly polarised radiation can therefore be transmitted along either axis. The fibre output polarisation state is thus linearly-polarised and remains largely unaffected by fibre perturbations, such as kinks, bends and side pressure which in conventional fibres produce major changes in output state. The fibre is consequently useful in applications requiring a defined output polarisation state, such as fibre interferometers.

Fibre birefringence can be induced by introducing a large asymmetric stress in the fibre core and, to a lesser extent, in the cladding. A refractive index difference along the axes of stress asymmetry is produced as a result of the stress optic (photo-elastic) effect and the fibre appears birefringent. The stress can be generated by constructing the fibre of materials which have different coefficients of thermal expansion, the materials being arranged asymmetrically about the longitudinal axis; for example two different glasses can be used in the cladding of a fibre preform.

A variety of methods have been used to prepare birefringent fibres. One method is the sawing technique in which a circular, highly-doped preform is made by a conventional chemical vapour deposition process. It is then sawn along two sides with a diamond saw. Subsequently it is re-circularised by rotating and heating in a glass-working lathe, producing a preform of elliptical cross-section. With this method, only low levels of stress can be obtained, since attempts to saw highly-stressed preforms result in cracking. It is also difficult to control the process accurately. In another method, two grooves are machined along the length of a low-stress preform. Glass rods with a high expansion coefficient are then placed in the grooves. The preform is sleeved to contain the rods and pulled into a fibre. This method has the disadvantages that it is difficult to maintain a constant distance between the two rods and core, there may be a mismatch between the softening temperature of the preform and the rods and lack of uniformity of the rods may result in asymmetric stress characteristics. In yet another existing method layers of highly doped glass are deposited inside the quartz substrate tube. Strips of photo-resist are deposited longitudinally on the outer surface and the exposed areas etched. Subsequently a standard cladding and core are deposited to produce the desired asymmetric preform. This method is vulnerable to the introduction of cracks in the mechanical processing and the etching has to be repeated a number of times since acid etching attacks the resist as well as the glass.

DE—A1—2930781 describes a method of making a fibre optic light guide by drawing from a preform with a rotationally asymmetric dependence of refractive index on radial position.

EP—A1—17742 describes a method of making a multi-channel fibre optic light guide by collapsing a tubular preform having asymmetrically deposited layers on its internal surface.

In order to overcome many of the drawbacks of prior art methods we have now developed a method of producing high birefringent fibres based on vapour phase etching.

According to the invention there is provided a method of preparing a preform for a high birefringence optical fibre comprising the successive steps of exposing a hollow tube of a first glass to etching at two areas parallel to the tube axis and at diametrically opposite positions to remove two strips of glass in a direction parallel to the axis of the tube, applying to the inside of the tube a layer of an optical cladding material, and applying to the inside of the cladding material a layer of core material characterised in that etching is carried out by exposing the tube simultaneously to an etching gas and a high temperature at said two areas and a first layer of a second glass having an expansivity different from that of the first glass is applied to the inside of the tube prior to the exposure to the etching gas and the tube is subsequently collapsed to form an optically-asymmetric fibre optic preform.

There is also provided a preform for the preparation of a high birefringence optical fibre comprising a tube (10, 50) of a first glass, a layer (14) of an optical cladding glass within said tube and a layer (16) of an optical core glass within said tube on said layer of cladding glass characterised in that said tube (10, 50) has two diametrically opposed strips (12, 52) of a second glass having an expansivity different from that of the first glass on its inner surface and in that said layer (14) of said optical cladding glass covers said diametrically opposed strips.

The invention will now be described by way of example only with reference to the accompanying drawings in which:—

Figures 1(a) to 1(f) are cross sections of an optical fibre preform illustrating successive stages during its preparation;

Figure 2 illustrates the cross section of a fibre drawn from the preform;

Figure 3 illustrates schematically the apparatus used to prepare the preform;

Figure 4 illustrates part of the preform after the etching step;

Figures 5(a) and 5(b) illustrate stages of an alternative preparation method; and

Figure 6 shows in cross section an alternative preform.

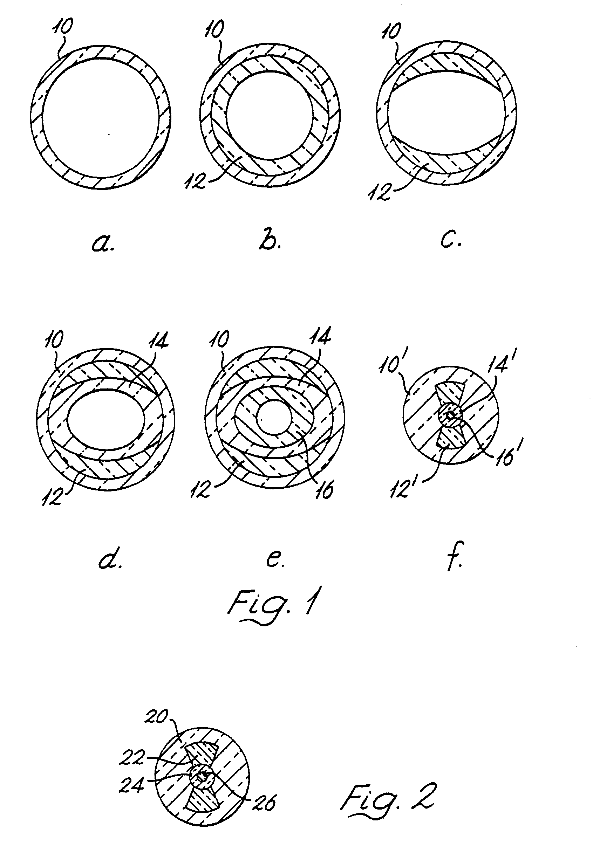

Figure 1(a) shows a precleaned circular substrate tube 10, for example a silica tube. A layer of a glass having a coefficient of thermal expansion substantially different from silica is deposited as an even layer 12 within the tube 10 (Figure 1(b)). For example a doped silica glass may be deposited by the well known technique of chemical vapour deposition. Typical dopants are $B_2O_3$, $GeO_2$ and $P_2O_5$ which will increase the expansion coefficient of silica. In particular, $P_2O_5$ and $B_2O_3$ have a large effect. The layer 12 is typically built up of many component layers, and its refractive index may be adjusted to be above or below that of the substrate tube by admixtures of $GeO_2$, $P_2O_5$, $AL_2O_3$, which increase the refractive index, and $B_2O_3$ and fluorine, which decrease the refractive index.

The layer of doped glass 12 is then etched to remove two diametrically opposite longitudinal strips, see Figure 1(c), the etching continuing until the doped glass is completely removed in these two areas. The etching is achieved by passing a fluorine-containing gas into the tube, and heating the outside of the substrate tube 10 in the areas in which etching is required; the heat liberates fluorine which attacks the glass.

After etching, the substrate-tube bore has four separate regions; two regions coated with doped silica, and two regions from which the doped silica has been entirely removed. The relative sizes of these regions can be easily controlled, in accordance with requirements in the completed preform, by varying the circumferential extent of the hot zones used in the etching process.

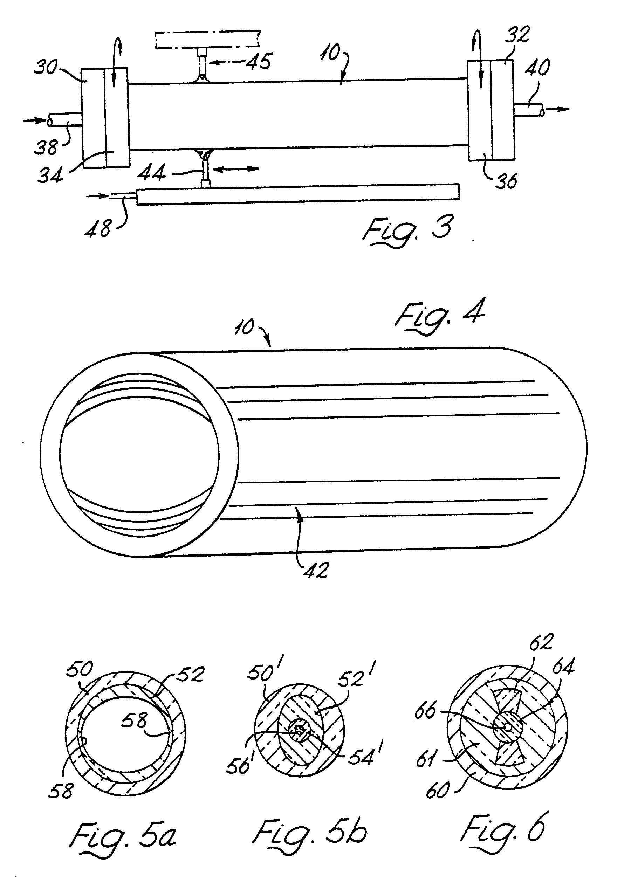

A layer 14 of low-loss optical cladding material is now deposited on the etched layer, Figure 1(d), and a layer 16 of core material is deposited on the cladding layer, Figure 1(e). The cladding and core materials may be deposited by chemical vapour deposition. The core is typically germania/silica and the cladding is typically silica or lightly-doped silica. The tube is then heated to a sufficiently high temperature for the action of surface tension to collapse the tube. A small internal positive pressure is maintained during the process to give an optical fibre preform 18 having the cross-sectional construction illustrated in Figure 1(f), i.e. with two regions of doped glass 12' spaced from a central core 16' surrounded by a layer of cladding 14' and embedded in a substrate layer of undoped glass 10' having a circular external surface. The doped regions form a "bow tie" shape. The preform 18, when drawn down by any suitable method, gives an optical fibre having a cross section as illustrated in Figure 2, with an asymmetrical arrangement of undoped glass 20 and doped glass 22. The difference in coefficients of thermal expansion between the regions 22 and 20 causes asymmetric stresses in the fibre, and a high level of birefringence is present.

The doped glass layer 22 need not have any optical function; it may merely generate stress in the optical fibre, but to prevent unwanted propagation effects it preferably has an optical index equal to or less than that of the silica substrate 10'.

The high-thermal expansion regions of doped glass 22 in the final fibre should approach the fibre core 26 as closely as possible to impart maximum thermal stress to the core and thus maximum birefringence, but to achieve low optical loss an optical cladding 24 must surround the core 26 to a distance of several times the core radius. These conditions are achieved by varying the thickness of the deposited layers. To prevent unwanted guidance of light in the optical cladding 24, it preferably has an index equal to or less than that of the substrate 20.

The cross-sectional geometry of the drawn fibre illustrated in Figure 2 is close to the optimum shape predicted by mathematical theory. With such a cross-section, the refractive index conditions for optimum propagation are:—

$$n_{26} > n_{20}$$
$$n_{24} \leqslant n_{20}$$
$$n_{22} \leqslant n_{20}$$

One form of apparatus suitable for preparing the preform is illustrated in Figure 3. The tubular glass substrate 10 is fixed in a glass-working lathe, indicated in highly schematic form. The lathe comprises two end pieces 30, 32, each carrying an end support 34, 36, in which the substrate 10 is fixed and which can rotate the tube about its longitudinal axis as indicated by the arrows. A gas inlet pipe 38 is connected to the endpiece 30, and a gas exhaust pipe 40 is connected to the endpiece 32. Adjacent the tube 10 is a gas burner 44 which is reciprocatable along a support 46 parallel to the axis of the tube 10; the support 46 has a gas supply tube 48.

In use the substrate 10 is rotated and heated by the reciprocating burner 44. A mixture of gases is supplied through the tube 38 so that a layer of doped glass is deposited evenly on the inside of the substrate by chemical vapor deposition. For example 10 to 30 layers each 10 micrometres thick may be deposited. The gas may be any mixture of $SiCL_4$, $BBr_3$, $POCL_3$, $GeCL_4$ and $F_2$ plus $O_2$.

Rotation of the substrate is then ceased. An etching gas is now supplied through the tube 38 and the gas burner 44 is slowly traversed along the outside of the tube. The heat applied to the outside of the substrate 10 causes etching of the corresponding part of the doped glass inside the substrate. The rate of etching depends upon the concentration and flow rate of the etching gas and the temperature. The flame size is chosen in accordance with the area it is required to remove, but the heating will always be local. Many passes may be needed and usually the slow traverse always occurs in the same axial direction, followed by a fast return to the starting position at one end. To provide the second etched area, either the substrate 10 is rotated through 180° between forward traverses of the gas burner 44, or a second burner 45, shown dotted in Figure 3, is traversed simultaneously at a position diametrically opposite the burner 34.

Typically the etching gas is $SF_6$ or $CCl_2F_2$, but any other fluorine-liberating gas may be used. The etching gas may be mixed with oxygen or diluted with an unreactive gas such as nitrogen. The temperature in the locally heated area is typically 1200°C to 1500°C. At the higher tempera- 'ture etching can be completed in about 30 minutes using 10 traverses of the gas burner.

Figure 4 illustrates the external appearance of the substrate tube 10 after etching. As each of the incremental layers (up to 30) of deposited doped glass is etched away, an edge forms which is visible through the substrate as indicated by the lines 42. Each incremental layer forms four edges, spaced round the tube circumference. The positions of the edges change as etching proceeds, and can be used to decide when etching should be terminated.

The gas burner 44 is now extinguished, and the appropriate gases supplied in sequence through the supply tube 38 to deposit an optical cladding layer and a core layer as in the well-known chemical vapour deposition procedure. The substrate 10 with its internal coating layers is then collapsed at a higher temperature to form an optical fibre preform.

In a variation on the method, illustrated in Figures 5(a) and (b), steps essentially as outlined above may be followed, but the diametrically opposed etching of the internal deposited layer 52 on the substrate tube 50 by the traverse of one or two gas burners is not taken to completion. The layer is therefore not entirely removed, but merely thinned in two longitudinal strips 58 as shown in Figure 5(a). The cladding 54 and core 56 are applied as before and the coated substrate collapsed to give a preform with the cross-sectional geometry shown in Figure 5(b). The approximately elliptical region 52' has a high-expansion coefficient and serves to provide asymmetric stress aligned with the major and minor axes.

In this case the step in which a doped layer is deposited inside the substrate tube and subsequently etched may be omitted and etching performed directly on the substrate tube with the purpose of reducing its wall thickness in two longitudinal strips. An elliptical internal-geometry will be formed in the cladding and core layers and this can be used to provide stress asymmetry and birefringence.

With the cross-section illustrated in Figure 5(b), the refractive index conditions for optimum propagation are:—

$$n_{56} > n_{50}$$
$$n_{54} \leqslant n_{52}$$
$$n_{52} \leqslant n_{50}$$

In a further variation, the outside wall of a substrate tube is etched and thinned by introducing a fluorine-liberating gas into the flame of the gas burner 34. After deposition and collapse, the resulting preform can have a geometry similar to that shown in Figure 5(b), since the preform tends to circularise under the action of surface tension during the collapse process and the less viscous inner layers become elliptical in cross-section.

A modification of the external-etch process removes material from diametrically opposed horizontal strips of the preform after collapse to give an approximately circular preform. During drawing the resulting fibre tends to circularise, giving an elliptical internal cross-sectional geometry similar to that of Figure 5(b).

It should be understood that it is possible and in many cases advantageous to first deposit inside the substrate tube a layer of low-loss glass which may be undoped silica, or a layer of lightly doped glass with an index equal to or slightly less than silica. Typically this is a co-doped fluorine/$P_2O_5$ silica layer which has relatively high viscosity. The layer acts to buffer the subsequently deposited layers from the diffusion of hydroxyl contaminant from the substrate tube into the optical region. The arrangement after collapse is illustrated in Figure 6; the low-loss glass 61 is deposited on the substrate tube 60, and is coated in turn with a doped glass 62, a cladding layer 64 and a core layer 66. The similarity with Figure 2 will be evident. The refractive index conditions for optimum propagation are:—

$$n_{66} > n_{61}$$
$$n_{64} \leqslant n_{61}$$
$$n_{62} \leqslant n_{61}$$
$$n_{61} \leqslant n_{60}$$

Such a layer may also be applied when the Figure 5 configuration is used.

## Claims

1. A method of preparing a preform for a high bi-refringence optical fibre comprising the successive steps of exposing a hollow tube (10, 50) of a first glass to etching at two areas (58) parallel to the tube axis and at diametrically opposite positions to remove two strips of glass in a direction parallel to the axis of the tube, applying to the inside of the tube a layer (14) of an optical cladding material, and applying to the inside of the cladding material a layer (16) of core material characterised in that etching is carried out by exposing the tube simultaneously to an etching gas and a high temperature at said two areas and a first layer (12, 52) of a second glass having an expansivity different from that of the first glass (10, 50) is applied to the inside of the tube prior to the exposure to the etching gas and the tube is subsequently collapsed to form an optically-asymmetric fibre optic preform.

2. A method of preparing a preform as claimed in Claim 1 wherein the etching gas is a gas which releases fluorine when heated.

3. A method of preparing a preform as claimed in either claim 1 or claim 2 wherein the high temperature is applied by means of gas flames (44, 45) which are movable relative to the tube (10, 50) to heat an area of the tube of small circumferential extent.

4. A method of preparing a preform as claimed in Claim 1 wherein the second glass consists of silica and a dopant material.

5. A method of preparing a preform as claimed in Claim 4 wherein the dopant is germania.

6. A method of preparing a preform as claimed in Claim 4 wherein the dopant is phosphorus pentoxide.

7. A method of preparing a preform as claimed in Claim 4 wherein the dopant is alumina.

8. A method of preparing a preform as claimed in Claim 4 wherein the dopant is boron trioxide.

9. A method of preparing a preform as claimed in Claim 4 wherein the dopant is fluorine.

10. A preform for the preparation of high birefringence optical fibre comprising a tube (10, 50) of a first glass, a layer (14) of an optical cladding glass within said tube and a layer (16) of an optical core glass within said tube on said layer of cladding glass characterised in that said tube (10, 50) has two diametrically opposed strips (12, 52) of a second glass having an expansivity different from that of the first glass on its inner surface and in that said layer (14) of said optical cladding glass covers said diametrically opposed strips.

**Patentansprüche**

1. Verfahren zur Herstellung einer Vorform für eine hochdoppeltbrechende Lichtleitfaser, mit den aufeinanderfolgenden Schritten: ein Hohlrohr (10, 50) aus einem ersten Glasmaterial wird in zwei Bereichen (58) parallel zur Rohrachse und in sich diametral gegenüberliegenden Positionen einer Ätzung ausgesetzt, um zwei Streifen des Glasmaterials in einer Richtung parallel zu der Achse des Rohrs zu entfernen, auf die Innenseite des Rohrs wird eine Schicht (14) aus einem optisch abschirmenden Material aufgebracht und auf die Innenseite des abschirmenden Materials wird eine Schicht (16) aus einem Kernmaterial aufgebracht, dadurch gekennzeichnet, daß das Ätzen dadurch ausgeführt wird, daß das Rohr gleichzeitig einem Ätzgas und einer hohen Temperatur in den beiden Bereichen ausgesetzt wird und eine erste Schicht (12, 52) aus einem zweiten Glasmaterial, das einen Ausdehnungskoeffizienten hat, der sich von dem des ersten Glasmaterials (10, 50) unterscheidet, auf die Innenseite des Rohrs aufgebracht wird, bevor diese dem Ätzgas ausgesetzt wird, und das Rohr nachfolgend zusammengedrückt wird, um eine optisch asymmetrische Vorform für eine Lichtleitfaser zu bilden.

2. Verfahren zur Herstellung einer Vorform nach Anspruch 1, bei dem das Ätzgas ein Gas ist, das Fluor freigibt, wenn es erhitzt wird.

3. Verfahren zur Herstellung einer Vorform nach Anspruch 1 oder 2, bei dem die hohe Temperatur mittels Gasflammen (44, 45) erreicht wird, die gegenüber dem Rohr (10, 50) bewegbar sind, um einen Bereich des Rohrs mit kleiner umfangsmäßiger Ausdehnung zu erhitzen.

4. Verfahren zur Herstellung einer Vorform nach Anspruch 1, bei dem das zweite Glasmaterial aus Siliziumoxid und einem Zumischmaterial besteht.

5. Verfahren zur Herstellung einer Vorform nach Anspruch 4, bei dem das Zumischmaterial Germaniumoxid (germania) ist.

6. Verfahren zur Herstellung einer Vorform nach Anspruch 4, bei dem das Zumischmaterial Phosphorpentoxid ist.

7. Verfahren zur Herstellung einer Vorform nach Anspruch 4, bei dem das Zumischmaterial Aluminiumoxid ist.

8. Verfahren zur Herstellung einer Vorform nach Anspruch 4, bei dem das Zumischmaterial Bortrioxid ist.

9. Verfahren zur Herstellung einer Vorform nach Anspruch 4, bei dem das Zumischmaterial Fluor ist.

10. Vorform zur Herstellung einer hochdoppeltbrechenden Lichtleitfaser, bestehend aus einem Rohr (10, 50) aus einem ersten Glasmaterial, einer Schicht (14) aus einem optisch abschirmenden Glasmaterial innerhalb des Rohrs und einer Schicht (16) aus einem optischen Kernglasmaterial innerhalb des Rohrs auf der Schicht aus dem abschirmenden Glasmaterial, dadurch gekennzeichnet, daß das Rohr (10, 50) zwei sich diametral gegenüberliegende Streifen (12, 52) aus einem zweiten Glasmaterial, das einen Ausdehnungskoeffizienten hat, der sich von dem des ersten Glasmaterials unterscheidet, auf seiner Innenseite hat und daß die Schicht (4) des optisch abschirmenden Glasmaterials die sich diametral gegenüberliegenden Streifen bedeckt.

**Revendications**

1. Procédé de préparation d'une ébauche d'une fibre optique ayant une biréfringence élevée, comprenant les étapes successives d'exposition d'un tube (10, 50) d'un premier verre à une attaque chimique dans deux zones (58) parallèles à l'axe du tube et ayant des positions diamétralement opposées afin que deux bandes de verre soient retirées en direction parallèle à l'axe du tube, d'application, à l'intérieur du tube, d'une couche (14) d'un matériau de revêtement optique, et d'application à l'intérieur du matériau de revêtement d'une couche (16) d'un matériau d'âme, caractérisé en ce que l'attaque chimique est réalisée par exposition du tube simultanément à un gaz d'attaque chimique et à une température élevée dans les deux zones et une première couche (12, 52) d'un second verre ayant un coefficient de dilatation différent de celui du premier verre (10, 50) est appliquée à l'intérieur du tube avant l'exposition au gaz d'attaque, et le tube est ensuite affaissé afin qu'il forme une ébauche de fibre optique qui est optiquement asymétrique.

2. Procédé de préparation d'une ébauche selon la revendication 1, dans lequel le gaz d'attaque chimique est un gaz qui libère du fluor lorsqu'il est chauffé.

3. Procédé de préparation d'une ébauche selon l'une des revendications 1 et 2, dans lequel la température élevée est appliquée à l'aide de flammes (44, 45) formées par un gaz et qui sont mobiles par rapport aux tubes (10, 50) afin qu'elles chauffent une zone du tube qui a une faible étendue circonférentielle.

4. Procédé de préparation d'une ébauche selon la revendication 1, dans lequel le second verre est formé de silice et d'une matière de dopage.

5. Procédé de préparation d'une ébauche selon la revendication 4, dans lequel la matière de dopage est l'oxyde de germanium.

6. Procédé de préparation d'une ébauche selon la revendication 4, dans lequel la matière de dopage est le pentoxyde de phosphore.

7. Procédé de préparation d'une ébauche selon la revendication 4, dans lequel la matière de dopage est l'alumine.

8. Procédé de préparation d'une ébauche selon la revendication 4 dans lequel la matière de dopage est le trioxyde de bore.

9. Procédé de préparation d'une ébauche selon la revendication 4, dans lequel la matière de dopage est le fluor.

10. Ebauche destinée à la préparation d'une fibre optique ayant une biréfringence élevée, comprenant un tube (10, 50) d'un premier verre, une couche (14) d'un verre de revêtement optique disposé dans le tube et une couche (16) d'un verre d'âme optique placé dans le tube sur la couche de verre de revêtement, caractérisée en ce que le tube (10, 50) a deux bandes (12, 52) diamétralement opposées formées d'un second verre ayant un coefficient de dilatation différent de celui du premier verre, à sa surface interne, et en ce que la couche (14) du verre de revêtement optique recouvre les zones diamétralement opposées.

Fig. 1

Fig. 2

Fig. 3

Fig. 4

Fig. 5a

Fig. 5b

Fig. 6